# FASCICULE DE BREVET EUROPEEN

(11) **EP 1 390 225 B1**
(45) Date de publication et mention de la délivrance du brevet: **27.07.2005**
(21) Numéro de dépôt: 02740792.3
(22) Date de dépôt: 17.05.2002
(51) Int. Cl.: B60N 2/06, B60N 2/427

(54) **BANQUETTE A GEOMETRIE VARIABLE, NOTAMMENT POUR VEHICULE AUTOMOBILE, A BOSSES ANTI-SOUS-MARINAGE ROTATIVES**
SITZBANK MIT VERÄNDERLICHER FORM, INSBESONDERE FÜR KRAFTFAHRZEUGE, MIT DREHBARER ERHEBUNG ZUR VERHINDERUNG DES ABTAUCHENS
VARIABLE GEOMETRY SEAT, IN PARTICULAR FOR MOTOR VEHICLE, WITH ROTARY ANTI-SUBMARINING PROTUBERANCES

(30) Priorité: 17.05.2001 FR 0106528
(43) Date de publication de la demande: 25.02.2004
(73) Titulaire: Renault s.a.s., 92100 Boulogne Billancourt (FR)
(72) Inventeur: FREYTRICH, Jean-Pierre, F-92130 Issy Les Moulineaux (FR); FERRON, Thierry, F-78370 Plaisir (FR)
(86) Numéro de dépôt international: PCT/FR2002/001668
(87) Numéro de publication internationale: WO 2002/092383

(56) Documents cités:
- EP-A- 0 403 072
- EP-A- 1 060 944
- WO-A-93/04892
- FR-A- 2 775 637
- FR-A- 2 815 912
- US-A- 5 636 884

## Description

La présente invention est relative à une banquette pour véhicule automobile du type comportant une assise à géométrie variable formée d'au moins deux parties d'assise de forme sensiblement rectangulaire et planes, montées mobiles sur un châssis entre une position «grande largeur » dans laquelle elles sont accolées selon leur largeur et une position « petite largeur » dans laquelle elles sont accolées selon leur longueur, une partie d'assise comportant une plaque d'assise rigide supportant un coussin, montée mobile sur ledit châssis entre lesdites positions, et comportant au moins une bosse anti-sous-marinage s'étendant, dans chacune desdites positions, le long du bord de ladite plaque d'assise situé à l'avant de ladite banquette.

On connaît, notamment dans la demande de brevet français n°00-14007 déposée le 31 Octobre 2000 par la Demanderesse (FR-A-2 815 512, ne formant pas partie de l'état de la technique), une banquette dont la largeur peut être réduite afin d'autoriser son recul entre les roues arrière, et augmenter ainsi la place libre devant les passagers qui y sont assis.

Cette banquette comporte un dossier dont la largeur, en partie basse, peut être diminuée par des découpes latérales, de manière à pouvoir se placer entre les passages des roues, et une assise en deux parties sensiblement rectangulaires pouvant être accolées par un de leurs petits bords de manière à offrir trois places, ou par un de leurs grands bords, de manière à en offrir deux. La transition entre les positions « grande largeur » et « petite largeur » de la banquette se fait par pivotement des deux parties d'assise de manière que les grands bords définissant le bord avant de l'assise dans la position « grande largeur » s'accolent dans la position « petite largeur ».

Pour la sécurité des passagers, une banquette doit comporter, sous leurs cuisses, des bosses anti-sous-marinage. Ces bosses, rigides, s'étendent le long du bord avant de la banquette, et permettent, en cas d'accident du véhicule, d'empêcher le glissement d'un passager sous sa ceinture de sécurité. Couvertes par la mousse du coussin de la banquette, ces bosses ne sont pas perceptibles par le passager et ne nuisent pas son confort. En effet, seules ses cuisses reposent à la verticale des bosses, sans comprimer fortement ta mousse.

La banquette décrite dans ladite demande de brevet français No. 00-14007 préconise de monter à demeure des bosses anti-sous-marinage sur les grand et petit bords de chaque partie d'assise définissant le bord avant de l'assise de la banquette dans ses positions « grande largeur » et « petite largeur ». Les bosses disposées sur les grands bords sont donc placées, dans la position « petite largeur » sensiblement selon l'axe médian du véhicule et s'étendent sur toute la profondeur de l'assise, de sorte que les fesses d'un passager assis au milieu de la banquette reposent à la verticale de ces bosses. Le poids de ce passager écrase la mousse et il ressent désagréablement la présence des bosses sous-jacentes.

Le but de la présente invention est de fournir une banquette du type précité dont les bosses anti-sous-marinages ne soient perceptibles dans aucune des deux positions de la banquette.

On atteint ce but de l'invention, ainsi que d'autres qui apparaîtront à la lecture de la description qui va suivre, avec une banquette à géométrie variable, notamment pour véhicule automobile, comportant au moins une plaque d'assise rigide sensiblement rectangulaire couverte d'un coussin et montée pivotante sur un châssis d'assise entre des première et deuxième positions dans lesquelles, respectivement, des premier et deuxième bords contigus de ladite plaque d'assise s'étendent à l'avant de ladite banquette, et dans lesquelles au moins une bosse anti-sous-marinàge s'étend au long du bord avant de ladite banquette, ladite bosse anti-sous-marinage étant sensiblement rectiligne et montée à rotation relativement à ladite plaque d'assise autour d'un axe sensiblement perpendiculaire au plan de celle-ci, de manière à être sélectivement orientable par rotation au long du bord avant de ladite banquette.

Comme on le verra plus loin en détail, grâce à ce montage de la bosse anti-sous-marinage, celle-ci peut conserver la même orientation, quelle que soit la position donnée à la plaque d'assise. Une seule bosse anti-sous-marinage suffit donc sur chaque plaque d'assise, ce qui supprime la gêne évoquée ci-dessus à propos de la banquette décrite dans la demande de brevet français No. 00-14007 précitée.

Selon d'autres caractéristiques de la présente invention :
- la banquette comporte des moyens d'accouplement de la rotation de ladite bosse anti-sous-marinage relativement à ladite plaque d'assise et du pivotement de ladite plaque d'assise sur ledit châssis d'assise, de manière que ladite bosse conserve une même orientation par rapport audit châssis d'assise dans les deux dites positions ;
- le pivotement de ladite plaque d'assise sur ledit châssis d'assise est guidé par au moins deux ergots solidaires de ladite plaque d'assise et coulissant dans deux boutonnières correspondantes pratiquées dans ledit châssis d'assise ;
- un desdits ergots est solidaire de ladite bosse anti-sous-marinage et sert de pivot à la rotation de ladite bosse anti-sous-marinage relativement à ladite plaque d'assise ;
- lesdits moyens d'accouplement comportent une biellette dont les première et deuxième extrémités sont montées à rotation autour de premier et deuxième pivots, respectivement, orientés parallèlement à l'axe de la rotation de ladite bosse relativement à ladite plaque d'assise, et solidaires, respectivement, de ladite bosse et dudit châssis d'assise, ledit premier pivot étant excentré relativement au centre de la rotation de ladite bosse relativement à ladite plaque d'assise ;
- ladite bosse anti-sous-marinage est fixée sur un disque monté à rotation sur ladite plaque d'assise ;
- un coussinet solidaire de ladite bosse est conformé pour tourner avec celle-ci dans un logement complémentaire pratiqué sur la face inférieure dudit coussin.

D'autres caractéristiques et avantages de l'invention apparaîtront à la lecture de la description qui va suivre et à l'examen du dessin annexé dans lequel :
- les figures 1 à 4 sont des vues simplifiées et en perspective d'une banquette selon le mode de réalisation préféré de l'invention à différentes étapes intermédiaires entre les positions « grande largeur » et « petite largeur » ;
- la figure 5 est une vue éclatée et en perspective d'une bosse anti-sous-marinage, d'un coussinet la recouvrant et d'un coussin d'assise, ces deux derniers organes n'étant pas représentés sur les figures 1 à 4 ;
- la figure 6 est une vue simplifiée d'une banquette selon l'invention et de son image dans un miroir placé sous elle. Les images dans ce miroir des organes de la banquette sont annotés avec les mêmes références numériques que ces organes, affectées d'un indice « i »

Dans la description et les revendications qui vont suivre, les indications relatives à la localisation des éléments décrits, telles que "horizontal", "avant", "droite", "gauche", "arrière", "latéral", "haut", "bas", doivent être interprétées classiquement comme celles que fournirait un observateur assis dans le véhicule et regardant vers son capot, le véhicule étant sur une surface horizontale.

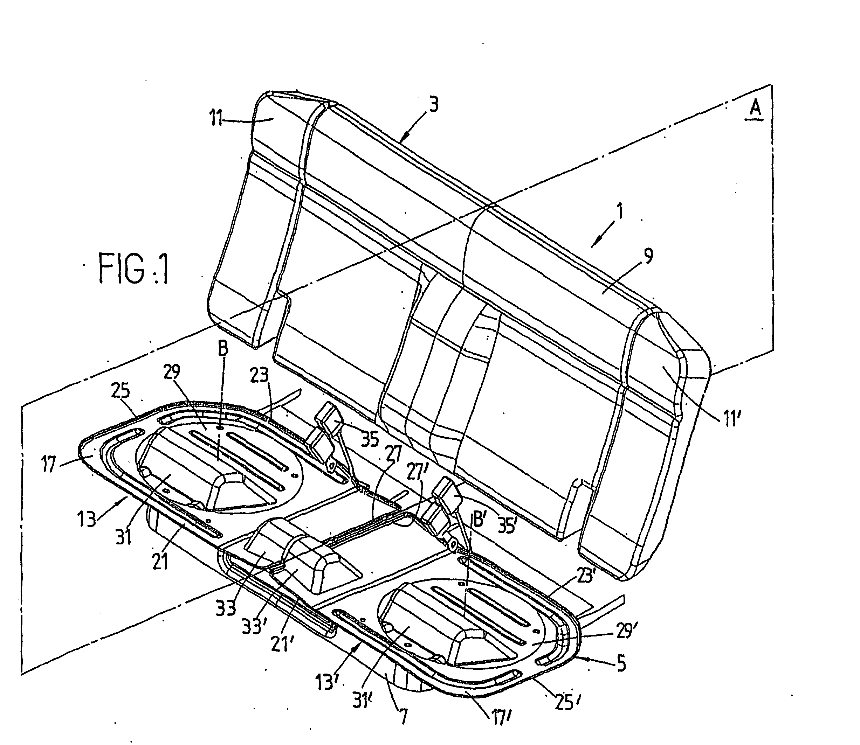

On se réfère à la figure 1 du dessins annexé qui représente une banquette 1 destinée à être installée dans l'habitacle d'un véhicule, entre une banquette ou des sièges avant et le rétrécissement de l'habitacle dû au passage des roues arrière.

La banquette 1 étant symétrique par rapport au plan longitudinal A du véhicule, seule la moitié droite de la banquette 1, vue par un passager, c'est-à-dire située à gauche de la figure 1, est décrite ci-dessous en utilisant des repères simples. Les parties correspondantes de l'autre moitié sont pourvues des mêmes références affectées du signe prime.

La banquette 1 comporte un dossier 3 et une assise 5, montés sur un châssis de dossier non représenté et un châssis d'assise 7, respectivement.

Le dossier comporte trois parties accolées :
- un dossier principal 9, solidaire du châssis de dossier, et
- deux dossiers latéraux 11 et 11' de largeur réduite, fixés sur le châssis du véhicule.

Des rails équipés de moyens de blocage, non représentés, solidaires du châssis du véhicule, permettent un coulissement longitudinal du dossier principal 9 et son blocage dans des positions avancée et reculée.

L'assise 5 comporte des parties d'assise droite et gauche, 13 et 13' respectivement, sensiblement planes et rectangulaires.

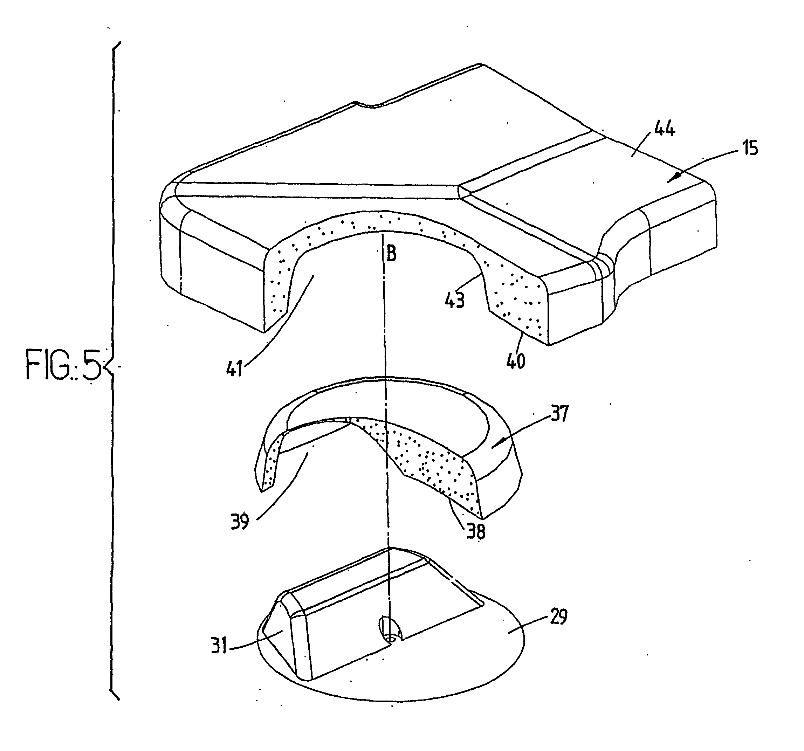

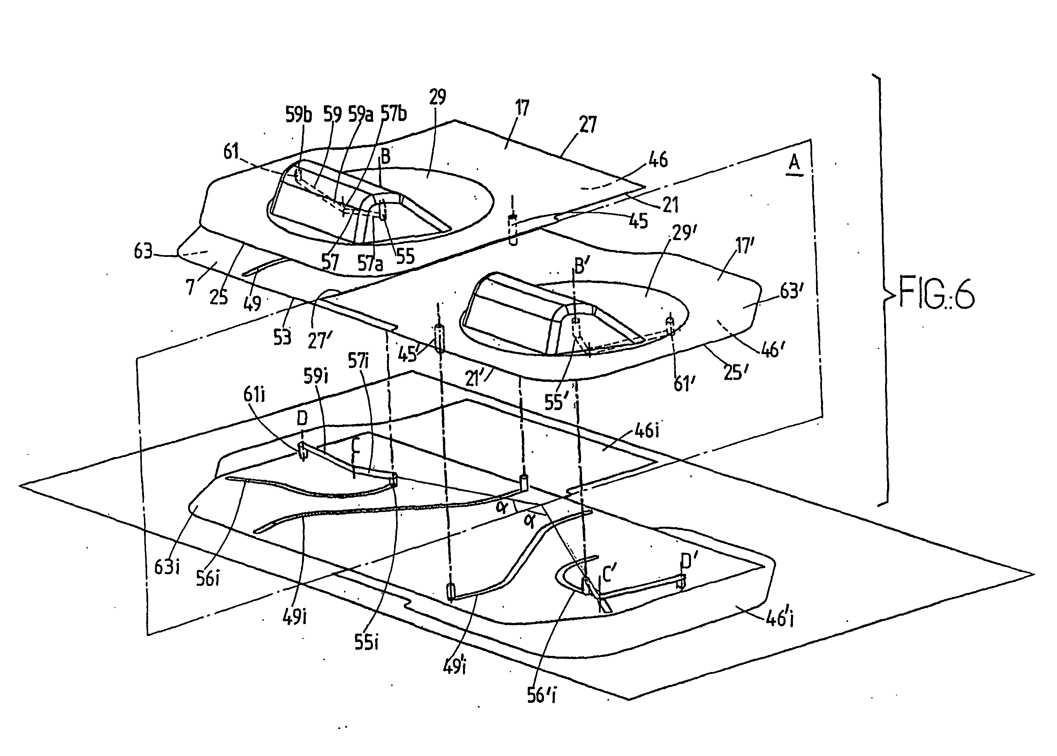

La partie d'assise droite 13 comprend un coussin 15 (figure 5), par exemple en mousse, fixé sur une plaque d'assise 17 sensiblement horizontale, rigide, par exemple en acier, et montée pivotante sur le châssis d'assise 7. Ce pivotement, sensiblement à l'horizontale, est guidé par des moyens de pivotement décrits ci-après (figure 6).

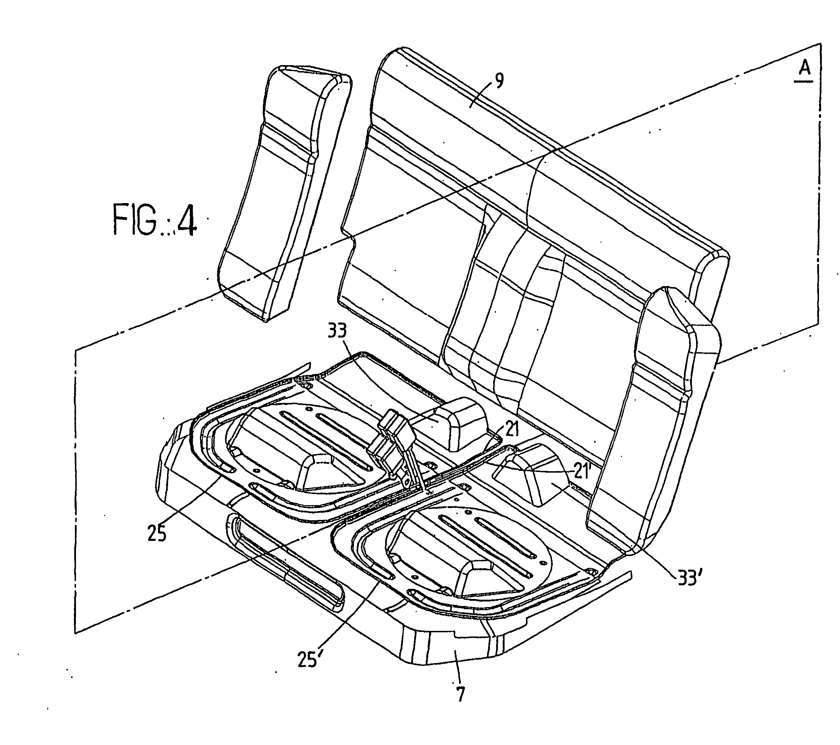

La plaque d'assise 17 a deux grands bords, avant 21 et arrière 23, et deux petits bords, extérieur 25 et intérieur 27, nommés par référence à leur localisation dans la position « grande largeur » de la banquette 1. Dans la position « petite largeur », (figure 4), le petit bord extérieur 25 est placé à l'avant de la banquette.

Des moyens de blocage non représentés, par exemple un verrou, permettent d'immobiliser la plaque d'assise 17 dans les deux positions de la banquette 1.

Un disque 29 est monté à rotation sur la plaque d'assise 17 autour d'un axe B sensiblement perpendiculaire au plan de la plaque d'assise 17.

Une bosse anti-sous-marinage 31 de forme sensiblement allongée et rectiligne est fixée sur le disque 29. Les emplacements du disque 29 sur la plaque d'assise 17 et de la bosse 31 sur le disque 29 sont déterminés de manière que, par rotation du disque 29, la bosse 31 puisse s'étendre le long du grand bord avant 21 (figure 1) ou du petit bord extérieur 25 (figure 4).

Une demi-bosse anti-sous-marinage 33 est fixée en bordure et perpendiculairement au petit bord intérieur 27, à proximité du grand bord avant 21, de manière que, dans la position « grande largeur », les deux demi-bosses 33 et 33' forment une bosse centrale destinée à protéger, en cas d'accident, le passager assis au milieu de la banquette 1.

La rotation du disque 29 sur la plaque d'assise 17 est guidée par des moyens de guidage décrits ci-après en liaison avec la figure 6.

La partie d'assise 13 comporte également enfin des moyens d'accouplement (figure 6) entre le pivotement de la plaque d'assise 17 sur le châssis d'assise 7 et la rotation du disque 29 sur la plaque d'assise 17, plus amplement décrits ci-après.

La banquette 1 comporte enfin des pédoncules de ceintures de sécurité 35 et un dispositif de translation latérale de ces pédoncules couplé au pivotement de la plaque d'assise 17 sur le châssis d'assise 7, ce dispositif permettant aux pédoncules 35 d'être convenablement placés pour servir à deux ou trois passagers, selon la position « petite largeur » ou « grande largeur », respectivement.

Le fonctionnement du dispositif permettant de passer de la première position, dite « grande largeur » (figure 1), à la deuxième position, dite « petite largeur » (figure 4), est le suivant :

L'utilisateur débloque le dossier central 9, le recule par coulissement sur le châssis de dossier puis le bloque dans la nouvelle position.

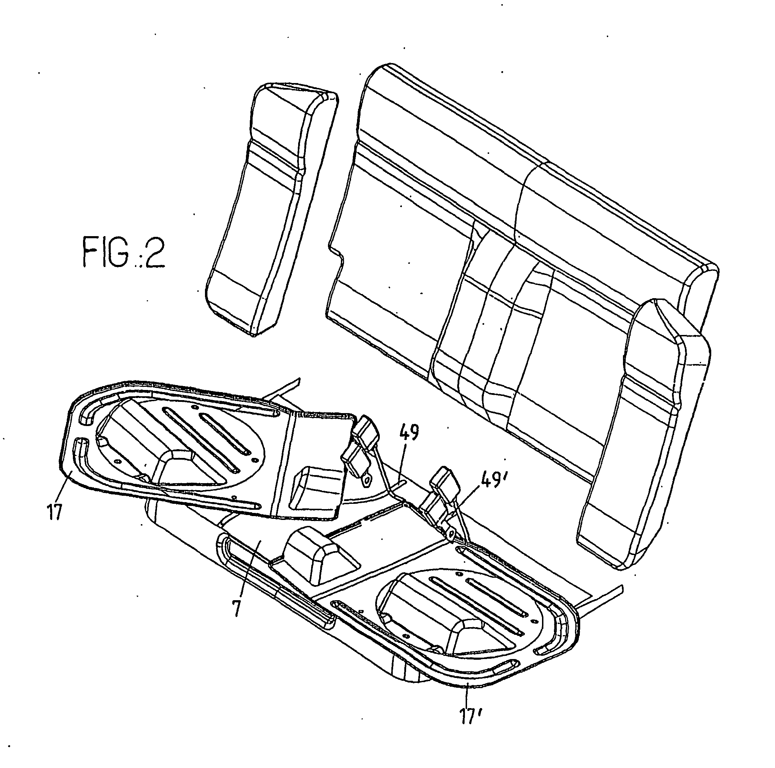

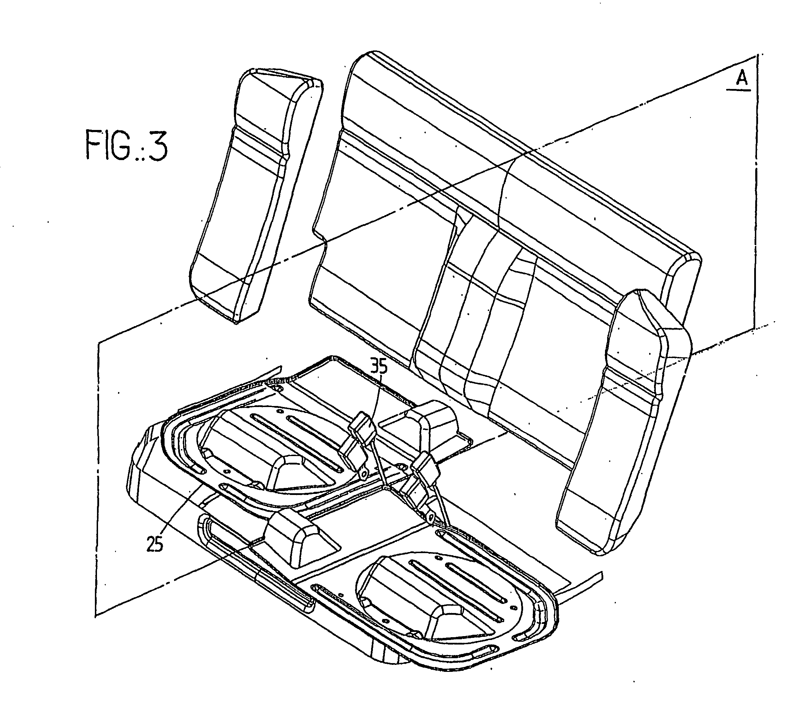

Il agit sur les moyens de blocage de la plaque d'assise 17 pour libérer le pivotement de la partie d'assise 13. Puis il exerce un couple sur celle-ci de manière à faire pivoter la plaque d'assise 17 sensiblement à plat sur le châssis d'assise 7, de manière à amener le petit bord extérieur 25 vers l'avant de la banquette 1 (figure 2). Le mouvement de pivotement, plus amplement décrit ci-après, comprend, par rapport au châssis d'assise 7, une rotation sensiblement d'un quart de tour de la plaque d'assise 17 et son recul vers l'arrière du véhicule, de manière à placer la demi-bosse 33 sensiblement sous le dossier central 9 reculé. Les passagers ne sont donc plus gênés par cette demi-bosse 33 (figure 3).

Le pivotement fait également tourner le disque 29 d'un quart de tour par rapport à la plaque d'assise 17, mais dans le sens contraire de celui de la rotation de la plaque d'assise 17 par rapport au châssis d'assise 7. Par rapport à ce dernier, la bosse 31 demeure donc, dans les deux positions de la banquette 1, perpendiculaire au plan longitudinal A, c'est-à-dire au long du bord avant de la banquette 1 et sous les cuisses du passager.

Le pivotement conduit enfin à l'accolement des pédoncules 35 des ceintures de sécurité.

L'utilisateur effectue les mêmes opérations avec la partie d'assise gauche 13', ce qui conduit à l'accolement des grands bords avant 21 et 21' sensiblement sur le plan longitudinal A (figure 4).

La figure 5 fait apparaître un coussinet 37, de préférence sensiblement circulaire et par exemple en mousse. Ce coussinet 37 est destiné à être fixé, selon l'axe B, sur le disque 29. D'un diamètre de préférence sensiblement égal à celui du disque 29, il comporte, sur sa face inférieure 38, un logement 39 de forme complémentaire de celle de la bosse 31 et dans lequel cette dernière se loge.

Le coussin 15 de la partie d'assise 13 comporte, sur sa face inférieure 40, un logement 41, de préférence sensiblement cylindrique, de forme complémentaire de celle du coussinet 37, et dans lequel ce dernier se loge.

Quand le disque 29 et la bosse 31 sont mis en rotation, ils entraînent le coussinet 37 en rotation à l'intérieur du trou 41 ménagé sous le coussin d'assise 15. La surface du coussinet 37 qui est tournée vers le coussin 15 étant de révolution selon l'axe B, le coussinet tourne à l'intérieur de ce trou 41 en restant accolé à la paroi 43 de ce trou.

Quelle que soit la position de la bosse 31, il n'y a donc pratiquement pas d'espace qui ne soit rempli de mousse entre l'ensemble formé par la plaque d'assise 17, le disque 29 et la bosse 31, et la surface supérieure 44 du coussin 15 sur laquelle s'assied le passager. Tout risque d'affaissement anormal de cette surface 44 sous le poids du passager est donc supprimé.

On se reporte à présent à la figure 6, pour décrire les moyens qui permettent de maintenir l'orientation de la bosse 31 dans les deux positions de la plaque d'assise 17.

Un ergot de plaque d'assise 45 est fixé sur la face inférieure 46 de la plaque d'assise 17, sensiblement au milieu du grand bord avant 21. Il est conformé pour glisser à l'intérieur d'une première boutonnière 49 pratiquée dans le châssis d'assise 7.

Le disque 29 comporte, fixé sur sa face inférieure, un ergot central 55 d'axe B monté à rotation dans un orifice de même axe, non représenté, percé dans la plaque d'assise 17. L'ergot central 55 traverse la plaque d'assise 17 et peut coulisser dans une deuxième boutonnière, dont seule l'image 56i est représentée, pratiquée dans le châssis d'assise 7. L'ergot central 55 réalise donc la double fonction de moyen de guidage du pivotement de la plaque d'assise 17 sur le châssis d'assise 7 et de pivot de la rotation du disque 29 et de la bosse 31, relativement à la plaque d'assise 17.

Les ergots 45 et 55 sont conformés pour maintenir la plaque d'assise 17 accolée au châssis d'assise 7, afin d'empêcher son enlèvement intempestif, notamment lors de son pivotement.

Un bras de levier 57 est fixé rigidement sensiblement à l'extrémité inférieure de l'ergot central 55 par sa première extrémité 57a, de manière à s'étendre sous le châssis d'assise 7 sans entrer en contact avec lui. Sa deuxième extrémité 57b est montée à rotation sur une première extrémité 59a d'une biellette 59, autour d'un axe C sensiblement perpendiculaire au plan du châssis d'assise 7.

La deuxième extrémité 59b de la biellette 59 est montée à rotation autour d'un pivot 61, solidaire de la face inférieure 63 de la plaque d'assise 7, d'axe D sensiblement perpendiculaire au plan du châssis d'assise 7.

Le disque 29, l'ergot central 55 et le bras de levier 57 forment un ensemble rigide, pouvant tourner autour de l'axe B par rapport à la plaque d'assise 17.

Le fonctionnement des organes illustrés sur la figure 6 est décrit pour un passage de la position « grande largeur » à la position « petite largeur », les opérations pour passer de la position « petite largeur » à la position « grande largeur » étant inverses.

L'utilisateur, après avoir débloqué la plaque d'assise 17, exerce une action sur celle-ci, par exemple par l'intermédiaire du coussin 15 qui y est fixé, en vue d'amener le petit bord extérieur 25 vers l'avant de la banquette 1.

Cette action fait pivoter la plaque d'assise 17 sensiblement à plat sur le châssis d'assise 7, le pivotement étant guidé d'une part par le coulissement de l'ergot de plaque d'assise 45 dans la première boutonnière 49, d'autre part par celui de l'ergot central 55 dans la deuxième boutonnière 56.

Les boutonnières 49 et 56 sont conformées en "S" et en "serpe" respectivement , comme représenté, de manière que le mouvement de la partie d'assise 13 comprenne :
- une translation latérale vers l'extérieur du véhicule permettant d'espacer les petits bords intérieurs 27 et 27' des deux plaques d'assises 17 et 17' respectivement, et donc la rotation subséquente, puis
- une rotation d'un quart de tour dans le sens permettant d'amener le petit bord extérieur 25 vers l'avant de la banquette 1, puis enfin
- une translation latérale vers l'intérieur du véhicule jusqu'à alignement du grand bord avant 21 avec le plan longitudinal A du véhicule.

Dans le mode de réalisation préféré de l'invention, le pivotement comprend également une translation d'avant en arrière de la partie d'assise 13, ce qui permet de reculer les coussins 15 et 15' vers l'arrière du véhicule sans devoir déplacer le châssis d'assise 7. Pour augmenter les possibilités de recul des coussins 15 et 15' par rapport au véhicule, le châssis d'assise 7 peut également être monté coulissant sur des rails longitudinaux pourvus de moyens de blocage appropriés.

Si les translations latérales vers l'extérieur puis vers l'intérieur du véhicule sont nécessairement successives, la rotation est de préférence couplée avec ces translations. L'axe de cette rotation est donc mobile par rapport au châssis d'assise 7.

Simultanément au pivotement de la plaque d'assise 17 sur le châssis d'assise 7, le disque 29 tourne d'un quart de tour par rapport à la plaque d'assise 17, dans le sens opposé à celui de la rotation de la plaque d'assise 17 par rapport au châssis d'assise 7.

Le glissement de l'ergot central 55 dans la deuxième boutonnière 56 fait en effet varier la distance qui le sépare du pivot 61, ce qui conduit à une variation de l'angle entre le bras de levier 57 et la biellette 59, mais également, compte tenu de la forme de la deuxième boutonnière 56, à une variation de l'angle α entre le bras de levier 57 et le plan longitudinal A.

Entraîné par le bras de levier 57, le disque 29 tourne autour de l'axe B, alternativement dans un sens et dans l'autre. La cinématique de cette rotation par rapport au châssis d'assise 7 dépend de la forme de la deuxième boutonnière 56. Cette dernière est conformée pour que, dans les deux positions de l'assise 5, l'orientation du bras de levier 57 par rapport au plan longitudinal A soit la même. Ainsi, en fin de pivotement de la plaque d'assise 17, le disque 29 a-t-il repris une position angulaire par rapport au châssis d'assise 7 identique à celle qu'il avait initialement.

La bosse 31 demeure donc, dans les deux positions de la banquette 1, perpendiculaire au plan longitudinal A.

Comme cela apparaît clairement à présent, la présente invention fournit une banquette dont les bosses anti-sous-marinages restent sous les cuisses des passagers, quel que soit le réglage adopté pour la largeur de cette banquette. Ces bosses restent donc imperceptibles.

Bien entendu, l'invention n'est pas limitée au procédé et au dispositif décrits et illustrés, fournis à titre d'exempte illustratif et non limitatif seulement.

Par exemple, des formes de boutonnières autres que celles représentées sont possibles.

En outre, des moyens d'accouplement du pivotement de la plaque d'assise 17 et de la rotation du disque 29 par rapport à cette plaque autres que la biellette 59 et le bras de levier 57 décrits, pourraient être utilisés pour mettre en oeuvre ce couplage.

## Revendications

1. Banquette (1) à géométrie variable, notamment pour véhicule automobile, comportant au moins une plaque d'assise (17, 17') rigide sensiblement rectangulaire couverte d'un coussin (15, 15') et montée pivotante sur un châssis d'assise (7) entre des première et deuxième positions dans lesquelles, respectivement, des premier (21, 21') et deuxième (25, 25') bords contigus de ladite plaque d'assise (17; 17') s'étendent à l'avant de ladite banquette (1), et dans lesquelles au moins une bosse anti-sous-marinage (31, 31') s'étend au long du bord avant de ladite banquette, ladite bosse anti-sous-marinage (31, 31') étant sensiblement rectiligne et montée à rotation relativement à ladite plaque d'assise (17, 17') autour d'un axe (B) sensiblement perpendiculaire an plan de celle-ci (17,17'), de manière à être sélectivement orientable par rotation au long du bord avant de ladite banquette.

2. Banquette selon la revendication 1, **caractérisée en ce qu'**elle comporte des moyens d'accouplement (57, 59 ; 57', 59') de la rotation de ladite bosse anti-sous-marinage (31, 31') relativement à ladite plaque d'assise (17, 17') et du pivotement de ladite plaque d'assise (17, 17') sur ledit châssis d'assise (7), de manière que ladite bosse (31, 31') conserve une même orientation par rapport audit châssis d'assise (7) dans les deux dites positions.

3. Banquette selon l'une quelconque des revendications précédentes, **caractérisée en ce que** le pivotement de ladite plaque d'assise (17, 17') sur ledit châssis d'assise (7) est guidé par au moins deux ergots (45, 45' ; 55, 55') solidaires de ladite plaque d'assise (17, 17') et coulissant dans deux boutonnières correspondantes (49, 49' ; 56, 56') pratiquées dans ledit châssis d'assise (7).

4. Banquette selon la revendication 3, **caractérisée en ce qu'**un (55, 55') desdits ergots est solidaire de ladite bosse anti-sous-marinage (31, 31') et sert de pivot à la rotation de ladite bosse (31, 31') anti-sous-marinage relativement à ladite plaque d'assise (17, 17').

5. Banquette selon l'une quelconque des revendications 2 à 4, **caractérisée en ce que** lesdits moyens d'accouplement (57, 57' ; 59, 59') comportent une biellette (59, 59') dont les première (59a) et deuxième (59b) extrémités sont montées à rotation autour de premier et deuxième pivots, respectivement, orientés parallèlement à l'axe (B) de la rotation de ladite bosse (31, 31') relativement à ladite plaque d'assise (17, 17'), et solidaires, respectivement, de ladite bosse (31, 31') et dudit châssis d'assise (7), ledit premier pivot étant excentré relativement au centre de la rotation de ladite bosse (31, 31') relativement à ladite plaque d'assise (17, 17').

6. Banquette selon l'une quelconque des revendications précédentes, **caractérisée en ce que** ladite bosse anti-sous-marinage (31, 31') est fixée sur un disque (29, 29') monté à rotation sur ladite plaque d'assise (17, 17').

7. Banquette selon la revendication 6, **caractérisée en ce qu'**un coussinet (37) solidaire de ladite bosse (31, 31') est conformé pour tourner avec celle-ci dans un logement complémentaire (41,41 ') pratiqué sur la face inférieure dudit coussin (15, 15').

8. Banquette selon l'une quelconque des revendications précédentes, **caractérisée en ce qu'**elle comporte au moins deux dites plaques d'assise (17, 17') conformées pour être accolées dans au moins une desdites positions, de manière que les coussins (15, 15') desdites parties d'assise (17, 17') définissent une assise continue.

9. Banquette selon la revendication 8, **caractérisée en ce que** lesdites plaques d'assise (17, 17') comportent chacune au moins une demi-bosse (33, 33'), lesdites demi-bosses (33, 33') étant adjacentes dans ladite position de manière à former une bosse anti-sous-marinage centrale sensiblement continue.

## Claims

1. Variable-geometry bench seat (1), in particular for a motor vehicle, comprising at least one substantially rectangular rigid seating platform (17, 17') covered with a cushion (15, 15') and mounted pivoting on a seat frame (7) between first and second positions in which, respectively, first (21, 21') and second (25, 25') adjacent edges of said seating platform (17; 17') extend to the front of said bench seat (1), and in which at least one anti-submarining protuberance (31, 31') extends along the front edge of said bench seat, said anti-submarining protuberance (31, 31') being substantially rectilinear and mounted in rotation relative to said seating platform (17, 17') about an axis (B) substantially perpendicular to the plane of the latter (17, 17'), so as to be selectively orientable by rotation along the front edge of said bench seat.

2. Bench seat according to claim 1, **characterized in that** it comprises means (57, 59; 57', 59') of coupling the rotation of said anti-submarining protuberance (31, 31') relative to said seating platform(17, 17') and the pivoting of said seating platform(17, 17') on said seat frame (7), so that said protuberance (31, 31') retains the same orientation with respect to said seat frame (7) in the two said positions.

3. Bench seat according to any one of the previous claims, **characterized in that** the pivoting of said seating platform (17, 17') on said seat frame (7) is guided by at least two pins (45, 45'; 55, 55') integral with said seating platform (17, 17') and sliding in two corresponding slots (49, 49'; 56, 56') arranged in said seat frame (7).

4. Bench seat according to claim 3, **characterized in that** one (55, 55') of said pins is integral with said anti-submarining protuberance (31, 31') and serves as a pivot for the rotation of said anti-submarining protuberance (31, 31') relative to said seating platform (17, 17').

5. Bench seat according to any one of claims 2 to 4, **characterized in that** said coupling means (57, 57'; 59 59') comprise a link (59, 59') the first (59a) and second (59b) ends of which are mounted in rotation about first and second pivots, respectively, orientated parallel to the axis (B) of rotation of said protuberance (31, 31') relative to said seating platform (17,17'), and integral, respectively, with said protuberance (31, 31') and said seat frame (7), said first pivot being moved off centre relative to the centre of rotation of said protuberance (31, 31') relative to said seating platform (17, 17').

6. Bench seat according to any one of the previous claims, **characterized in that** said anti-submarining protuberance (31, 31') is fixed on a disk (29, 29') mounted in rotation on said seating platform (17, 17').

7. Bench seat according to claim 6, **characterized in that** a pad (37) which is integral with said protuberance (31,31') is shaped so as to turn with the latter in a complementary housing (41, 41') arranged on the lower face of said cushion (15, 15').

8. Bench seat according to any one of the previous claims, **characterized in that** it comprises at least two said seating platforms (17, 17') shaped so as to be joined in at least one of said positions, so that the cushions (15, 15') of said seat parts (17, 17') define a continuous seat.

9. Bench seat according to claim 8, **characterized in that** said seating platforms (17, 17') each comprise at least one half-protuberance (33, 33'), said half-protuberances (33, 33') being adjacent in said position so as to form a substantially continuous central anti-submarining protuberance.

## Patentansprüche

1. Sitzbank (1) mit variabler Geometrie, insbesondere für ein Kraftfahrzeug, umfassend mindestens eine starre Sitzflächenplatte (17, 17'), die deutlich rechteckig ist, die mit einem Polster (15, 15') bedeckt ist und drehend auf einem Sitzflächengestell (7) zwischen ersten und zweiten Positionen montiert ist, in welchen sich, jeweils, erste (21, 21') und zweite (25, 25') angrenzende Ränder der Sitzflächenplatte (17, 17') zur Vorderseite der Sitzbank (1) erstrecken und in welchen sich mindestens ein Anti-Durchtauch-Höcker (31, 31') entlang des vorderen Randes der Sitzbank erstreckt, wobei der Anti-Durchtauch-Höcker (31, 31') deutlich gradlinig ist und in Drehung relativ zu der Sitzflächenplatte (17, 17') um eine Achse (B) montiert ist, die deutlich senkrecht zu der Ebene derselben (17, 17') liegt, um selektiv durch Drehung entlang des vorderen Randes der Sitzbank ausgerichtet werden zu können.

2. Sitzbank gemäß Anspruch 1, **dadurch gekennzeichnet, dass** sie Mittel zur Kopplung (57, 59; 57', 59') der Drehung des Anti-Durchtauch-Höckers (31, 31') relativ zu der Sitzflächenplatte (17, 17') und der Drehung der Sitzflächenplatte (17, 17') auf dem Sitzflächengestell (7) umfasst, derart, dass der Höcker (31, 31') die gleiche Ausrichtung im Verhältnis zu dem Sitzflächegestell (7) in den beiden Positionen beibehält.

3. Sitzbank gemäß einem der vorhergehenden Ansprüche, **dadurch gekennzeichnet, dass** die Drehung der Sitzflächenplatte (17, 17') auf dem Sitzflächengestell (7) durch mindestens zwei Zapfen (45, 45'; 55, 55') geführt wird, die fest mit der Sitzflächenplatte (17, 17') verbunden sind und in zwei entsprechenden länglichen Aussparungen (49, 49'; 56, 56') gleiten, die in das Sitzflächengestell (7) eingearbeitet sind.

4. Sitzbank gemäß Anspruch 3, **dadurch gekennzeichnet, dass** einer (55, 55') der Zapfen fest mit dem Anti-Durchtauch-Höcker (31, 31') verbunden ist und als Drehpunkt der Drehung des Anti-Durchtauch-Höckers (31, 31') relativ zu der Sitzflächenplatte (17, 17') dient.

5. Sitzbank gemäß einem der Ansprüche 2 bis 4, **dadurch gekennzeichnet, dass** die Mittel zur Kopplung (57, 57'; 59, 59') einen Schwingarm (59, 59') umfassen, dessen erste (59a) und zweite (59b) Enden jeweils in Drehung um erste und zweite Drehpunkte montiert sind, parallel zu der Achse (B) der Drehung des Höckers (31, 31') relativ zu der Sitzflächenplatte (17, 17'), und jeweils fest verbunden mit dem Höcker (31, 31') und dem Sitzflächengestell (7), wobei der erste Drehpunkt relativ zu dem Mittelpunkt der Drehung des Höckers (31, 31') relativ zu der Sitzflächenplatte (17, 17') außermittig angeordnet ist.

6. Sitzbank gemäß einem der vorhergehenden Ansprüche, **dadurch gekennzeichnet, dass** der Anti-Durchtauch-Höcker (31, 31') auf einer Scheibe (29, 29') befestigt ist, die in Drehung auf der Sitzflächenplatte (17, 17') montiert ist.

7. Sitzbank gemäß Anspruch 6, **dadurch gekennzeichnet, dass** ein kleines Polster (37), das fest mit dem Höcker (31, 31') verbunden ist, angepasst ist, um mit demselben in einer komplementären Aussparung (41, 41') zu drehen, welche in die untere Seite des Polsters (15, 15') eingearbeitet ist.

8. Sitzbank gemäß einem der vorhergehenden Ansprüche, **dadurch gekennzeichnet, dass** sie mindestens zwei Sitzflächenplatten (17, 17') aufweist, die angepasst sind, um in mindestens einer der Positionen aneinandergefügt zu werden, derart, dass die Polster (15, 15') der Sitzflächenteile (17, 17') einen kontinuierlichen Sitz bilden.

9. Sitzbank gemäß Anspruch 8, **dadurch gekennzeichnet, dass** die Sitzflächenplatten (17, 17') jede mindestens einen Halb-Höcker (33, 33') aufweisen, wobei die Halb-Höcker (33, 33') in der Position benachbart sind, um einen mittleren Anti-Durchtauch-Höcker zu bilden, der deutlich kontinuierlich ist.
